Europäisches Patentamt

European Patent Office

Office européen des brevets

(11) Veröffentlichungsnummer: **0 447 790 A1**

## (12) EUROPÄISCHE PATENTANMELDUNG

(21) Anmeldenummer: 91101911.5

(22) Anmeldetag: **12.02.91**

(51) Int. Cl.5: **F16D 1/08**, F16B 4/00, B23P 11/02

(30) Priorität: **20.03.90 DE 4008835**

(43) Veröffentlichungstag der Anmeldung:
**25.09.91 Patentblatt 91/39**

(84) Benannte Vertragsstaaten:
**BE CH DE FR IT LI**

(71) Anmelder: **MERCEDES BENZ AG**
**Mercedesstrasse 136**
**W-7000 Stuttgart 60(DE)**

(72) Erfinder: **Krämer, Johann, Dr.**
**Kolberger Strasse 5**
**W-7250 Leonberg 7(DE)**
Erfinder: **Renz, Rainer, Dr.**
**Leibniz Strasse 86**
**W-7000 Stuttgart(DE)**
Erfinder: **Haag, Günter, Dr.**
**Schönbergstrasse 2**
**W-7000 Stuttgart 70(DE)**

(54) **Kraftschlüssige Welle/Nabe-Verbindung und Verfahren zu ihrer Herstellung.**

(57) In eine kraftschlüssige Welle/Nabe-Verbindung, ist ein hülsenförmiges Mitnahmeelement (4) in einem ringförmigen Zwischenraum zwischen zwei konzentrischen Umfangsflächen (5,6) der Welle (2) bzw. der Nabe (3) unter Vorspannung eingebracht ist.

Das Mitnahmeelement (4) wird aus einer Formgedächtnislegierung hergestellt, deren sog. Martensit-Start-Temperatur unterhalb der Betriebstemperatur der Welle/Nabe-Verbindung Verbindung liegt. Durch sinnvolle Wandstärkereduzierung des Mitnahmeelementes im martensitischen Zustand kann erreicht werden, daß das Mitnahmeelement in diesem Zustand unter Spiel in den ringförmigen Zwischenraum lose eingefügt und anschließend in den austenitischen Zustand zurückgeführt wird, so daß es aufquillt und sich unter Vorspannung an die entsprechenden Fügeflächen anlegt.

Fig. 2

EP 0 447 790 A1

Die Erfindung betrifft eine kraftschlüssige Welle/Nabe-Verbindung nach dem Oberbegriff von Anspruch 1 wie sie beispielsweise aus der DE-PS 33 44 533 als bekannt hervorgeht. Auch die DE-PS 12 96 893, US-PS 11 56 582, DE-PS 27 46 836, DE-OS 37 29 885, DE-OS 29 35 215 oder die DE-PS 26 13 526 zeigen ebenfalls kraftschlüssige Welle/Nabe-Verbindungen unter Zwischenschaltung eines Mitnahmeelementes in Form einer meist gewellten Buchse bzw. Drahtringes. Ferner betrifft die Erfindung auch ein Verfahren zum Herstellen einer solchen kraftschlüssigen Welle/Nabe-Verbindung nach dem Oberbegriff von Anspruch 6, wie er aus dem zitierten Stand der Technik als bekannt unterstellt wird.

Derartige kraftschlüssige Welle/Nabe-Verbindungen sind vor allen Dingen für mittlere bis kleine Wellendurchmesser von Interesse, bei denen es aus Platzgründen schwierig oder gar unmöglich und häufig aus Kostengründen nicht vertretbar ist, aufwendige Formschluß- oder Kraftschlußelemente an den Fügeflächen anzubringen. Außerdem sollen durch eine solche Mitnahmebuchse, insbesondere wenn sie elastisch ausgebildet ist, Fügetoleranzen ausgeglichen werden. Nachteilig an den bekannten Welle/Nabe-Verbindungen ist, daß Fügetoleranzen zu einer Veränderung des Grenzdrehmomentes der kraftflüssigen Drehmomentverbindung zwischen Welle und Nabe führen. Bei Zusammenpassung einer innerhalb des Toleranzfeldes extrem dünnen Welle mit einer noch tolerierbaren maximalen Nabenbohrung kann es sein, daß das Grenzdrehmoment der kraftschlüssigen Welle/Nabe-Verbindung bedenklich niedrig wird. Sollte es einmal zu einem Schlupfen innerhalb der Welle/Nabe-Verbindung und dementsprechend zu einem Verschleiß an der Mitnahmebuchse kommen, so wird das maximale Grenzdrehmoment noch weiter reduziert, so daß Schlupfvorgänge noch häufiger auftreten können. Es ist dann relativ rasch ein Zustand erreicht, in dem eine sichere Drehmomentübertragung überhaupt nicht mehr gewährleistet ist. Im übrigen ist bei bekannten Welle/Nabe-Verbindungen mit elastisch nachstellbaren Mitnahmeelementen der kleinstmögliche Wellendurchmesser konstruktionsbedingt auf Werte oberhalb von etwa 20 mm begrenzt.

Aufgabe der Erfindung ist es, die gattungsgemäß zugrundegelegte kraftschlüssige Welle/Nabe-Verbindung dahingehend auszugestalten, daß trotz relativ grober Fügetoleranzen bzw. Fertigungstoleranzen der beteiligten Fügeflächen ein gewisses, einzuhaltendes Grenzdrehmoment besser und über eine größere Betriebsdauer hinweg gewährleistet werden kann als bisher.

Diese Aufgabe wird erfindungsgemäß durch die kennzeichnenden Merkmale von Anspruch 1 gelöst. Dank der Herstellung des Mitnahmeelementes aus einer Formgedächtnislegierung können die dem Mitnahmeelement zugedachten Anpreßkräfte über einen wesentlich größeren Toleranzbereich der Fügeflächen hinweg in gleicher Höhe aufrechterhalten werden. Die Formgedächtnislegierungen haben außer dem Formgedächtnisvermögen auch noch die Eigenschaft einer hohen pseudo-elastischen Verformbarkeit; innerhalb des Dehnungsbereiches einer pseudo-elastischen Verformung, die bis zu acht Prozent betragen kann, ändert sich die von dem Bauteil ausübbare kraft nur sehr wenig. Es können daher mit Bauteilen aus Formgedächtnislegierung über einen relativ großen Verformungsbereich hinweg Kräfte von nahezug gleicher Größe bei sehr kleinem Bauvolumen gespeichert werden. Diese Eigenschaft wird vorliegend sinnvoll ausgenutzt. Wegen der über einen relativ großen Verformungsweg hinweg auch in sehr kleinen Bauteilen speicherbaren, gleichbleibend hohen kräften kann das erfindungsgemäße Mitnahmeelement aus Formgedächtnislegierung insbesondere in dem in der Fügetechnik vor allem interessanten Bereich unterhalb von 20 mm Wellen- bzw. Zapfendurchmesser vorteilhaft zum Einsatz kommen. Dabei braucht, was aus konstruktiven und fertigungstechnischen Gründen häufig besonders wünschenswert ist, der Nabendurchmesser nur relativ wenig größer zu sein als der Wellendurchmesser. Durch die Erfindung wird der gattungsgemäßen Welle/Nabe-Verbindung vor allem ein Anwendungsgebiet im Bereich kleiner Wellendurchmesser sinnvoll erschlossen.

Zweckmäßige Ausgestaltungen einer Welle/Nadelverbindung können im übrigen den Ansprüchen 2 bis 5 entnommen werden.

Um die Kraftspeicherwirkung ohne besondere Vorbehandlung des Mitnahmeelementes von vornherein voll zur Geltung bringen zu können, ist beim Zusammenbau der Welle/Nabe-Verbindung eine besondere Vorgehensweise zu beachten, worauf der verfahrensmäßige Aspekt der vorliegenden Erfindung gemäß Anspruch 6 näher eingeht. Zweckmäßige Verfahrensausgestaltungen können den Ansprüchen 7 bis 10 entnommen werden.

Die Erfindung ist nachfolgend anhand verschiedener in den Zeichnungen dargesteller Ausführungsbeispiele noch näher erläutert; dabei zeigen:

Figur 1
eine kraftschlüssige Welle/Nabe-Verbindung am Beispiel der Befestigung eines Zahnrades an einem Elektromotor,

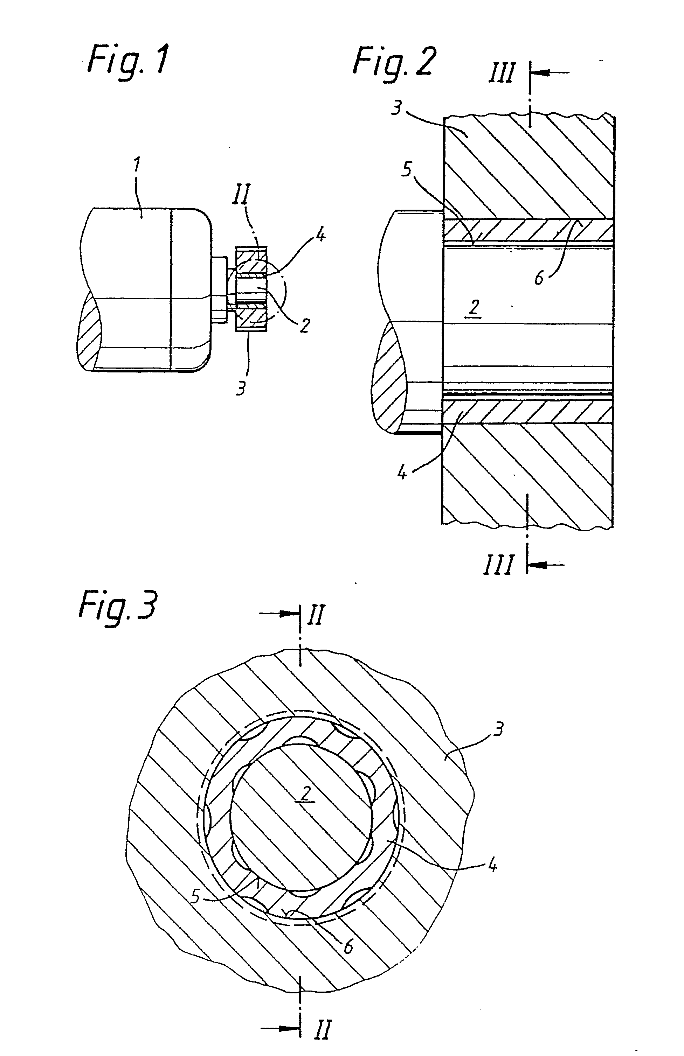

Figur 2
eine starke Ausschnittsvergrößerung der Welle/Nabe-Verbindung nach Figur 1,

Figur 3
einen achssenkrechten Schnitt durch die Welle/Nabe-Verbindung nach Figur 2 entlang der Schnittlinie III-III,

Figur 4
eine perspektivische Einzeldarstellung der in der Welle/Nabe-Verbindung nach den Figuren 1 bis 3 verwendeten Mitnahmebuchse,

Figur 5 bis 7
verschiedene andere Ausführungsbeispiele eines Mitnahmeelementes für eine Welle/Nabe-Verbindung,

Figur 8
die Herstellung einer weiteren Variante einer Mitnahmebuchse aus einem Noppenband,

Figur 9
einen achssenkrechten Schnitt durch ein weiteres Ausführungsbeispiel einer Welle/Nabe-Verbindung mit einer formschlüssigen Drehmomentverbindung zwischen Mitnahmebuchse und Welle,

Figur 10 bis 12
verschiedene Diagramme zur Erläuterung bestimmter Eigenschaften von Formgedächtnislegierungen und

Figur 13 bis 16
verschiedene Arbeitsphasen beim Fügen einer Welle/Nabe-Verbindung in schematisierter Darstellung.

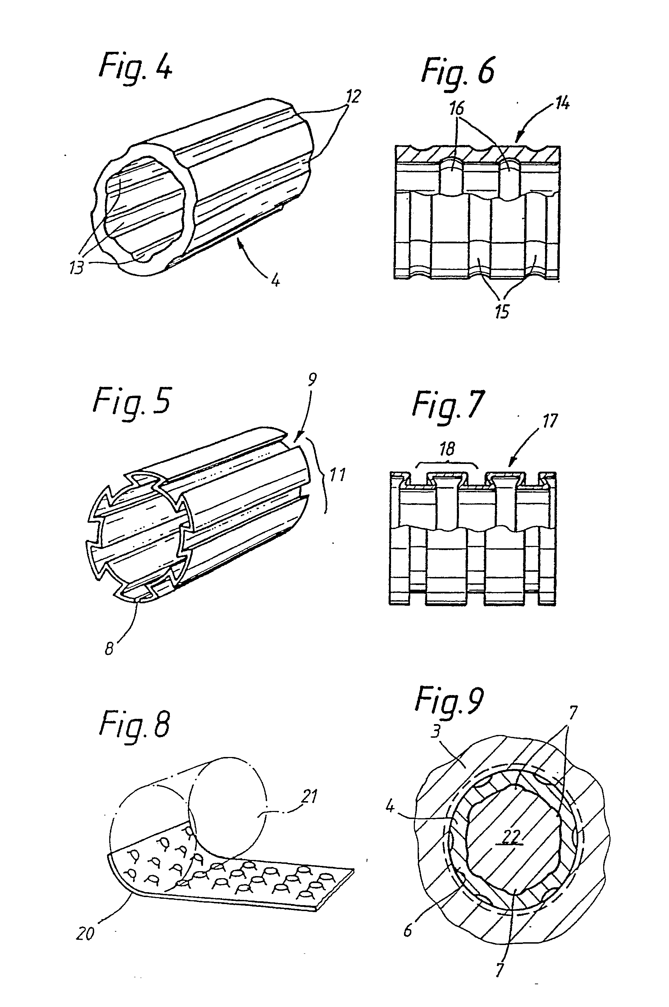

Die in den Figuren 1 bis 3 dargestellte kraftflüssige Welle/Nabe-Verbindung ist am Anwendungsbeispiel eines kleinen elektrischen Motoros 1 gezeigt, bei dem ein Zahnrad 3 auf einer Welle 2 kraftschlüssig befestigt werden soll. Zu diesem Zweck sind in der Welle/Nabe-Verbindung zwei konzentrisch zueinander angeordnete Umfangsflächen 5 und 6 vorgesehen, die einen ringförmigen Zwischenraum miteinander einschließen; dieser Zwischenraum ist durch ein elastisch vorgespanntes Mitnahmeelement ausgefüllt, welches kraftschlüssig an den glattflächigen Umfangsflächen 5 und 6 anliegt. Bei dem in den Figuren 1 bis 3 gezeigten Ausführungsbeispiel sind beide Umfangsflächen, also die wellenseitige und die nabenseitige Umfangsfläche 5 und 6 glattflächig ausgebildet, wogegen beim Ausführungsbeispiel nach Figur 9 nur die nabenseitige Umfangsfläche 6 glattflächig ausgebildet ist; die Welle 22 weist hier längsverlaufende Mitnahmekeile 7 auf, die in entsprechende innenseitige Längsrillen 13 der Buchse 4 formschlüssig eingreifen. Selbstverständlich kann beim Ausführungsbeispiel nach Figur 9 auch eine Sechskantwelle vorgesehen sein. Bei dem Ausführungsbeispiel nach Figur 9 ist also eine kraftschlüssige Drehmomentverbindung lediglich im Bereich der nabenseitigen Umfangsfläche 6 gegeben und nur in diesem Bereich kann diese Welle/Nabe-Verbindung bei Überschreiten des Grenzdrehmomentes schlupfen. Beim Ausführungsbeispiel nach den Figuren 1 bis 3 ist ein Kraftschluß innerhalb der Welle/Nabe-Verbindung sowohl im Bereich der wellenseitigen als auch im Bereich der nabenseitigen Umfangsfläche 5 bzw. 6 gegeben, so daß bei Überschreiten des Grenzdrehmomentes ein Schlupfen auf der wellenseitigen und/oder der nabenseitigen Umfangsfläche 5 bzw. 6 auftreten kann. Unter der Voraussetzung gleicher Flächenpressungen an beiden Umfangsflächen wird jedoch ein Schlupfen in der Regel an der Wellenoberfläche 5 auftreten, weil bei gleichem Drehmoment und gleicher Flächenpressung die Grenzreibung hier als erstes überschritten wird.

Angestrebt ist, daß trotz relativ hoher Fertigungstoleranzen der Fügeflächen, nämlich der wellenseitigen und der nabenseitigen Umfangsflächen 5 und 6 sowie der entsprechenden Umfangsflächen der Buchse 4 gleichwohl das sich ergebende Grenzdrehmoment innerhalb relativ enger Grenzen hält. Um dies zu erreichen, ist - wie gesagt - das als Buchse 4 ausgebildete Mitnahmeelement zwischen Welle 2 und Nabe bzw. Zahnrad 3 aus einer Formgedächtnislegierung hergestellt. Bauteile aus diesen Legierungen können sich nicht nur an bestimmte früher einmal eingenommene Formen "zurückerinnern", sondern auch auf sehr kleinem Bauraum trotz relativ großer ausgeprägter Formveränderungen hohe Kräfte innerhalb eines relativ schmalen Toleranzbandes speichern. Dadurch können kleine Baumaße - kleine Wellen- oder Nabendurchmesser und geringe Durchmesserunterschiede - in dem Mitnahmeelement bei hoher Funktionssicherheit realisiert werden. Diese Eigenschaften von Formgedächtnislegierungen werden vorliegend bei der kraftschlüssigen Welle/Nabe-Verbindung nutzbringend angewandt. Nachdem derartige Werkstoffe auch hervorragende Gleiteigenschaften besitzen, können derartige kraftschlüssige Welle/Nabe-Verbindung sogar gezielt als Rutschkupplung oder als drehmomentbegrenzendes Sicherheitselement eingesetzt werden, bei denen ein Durchrutschen der Welle/Nabe-Verbindung während des Betriebes ohne weiteres in Kauf genommen werden kann.

Bei den hier empfohlenen Formgedächtnislegierungen (englisch: Shape-Memory-Alloy) handelt es sich um eine Gruppe bekannter Legierungen, die zu den intermetallischen Verbindungen gehören; bei diesen Legierungen liegen Mischkristalle mit regelmäßiger Kristallstruktur und bestimmten Anteilen der Legierungspartner vor. Wesentlich ist, daß die einzelnen Legierungspartner in extrem hoher Reinheit verwendet werden. Technisch gebräuchlich sind Legierungen aus Nickel und Titan oder aus Kupfer, Zink und Aluminium oder aus Kupfer, Aluminium und Nickel. Diese Legierungen verändern ihre Kristallstruktur in Abhängigkeit von Temperatur und Spannung. Unterhalb einer kritischen, legierungsabhängigen Temperatur liegt der Werkstoff in martensitischer Gefügeform und oberhalb einer anderen, ebenfalls legierungsabhängigen Temperatur liegt das Gefüge in austenitischer Form vor. Mit der Gefügestruktur ändern sich auch die mechanischen Eigenschaften des Werkstoffes. In der Regel findet die Gefügeumwandlung innerhalb eines relativ schmalen Temperaturbereiches statt, wobei jedoch das Niveaus der Gefügeumwandlungstemperatur und die Breite des Temperaturbereiches legierungsspezifisch sind. Im Gegensatz zu üblichen Metallen bzw. Legierungen bilden die Formgedächtnislegierungen in der martensitischen Phase innerhalb des Gefüges leicht gegeneinander verschiebbare Martensitplatten (Grenzflächen, Zwillingsgrenzen), die eine außerordentlich hohe plastische Verformung zulassen. Die Besonderheit liegt darin, daß die plastische Gefügeverformung in einem weiten Dehnungsbereich durch sogenanntes reversibles Entzwillingen geschieht; bei herkömmlichen plastischen Verformungen treten innerhalb des Martensitgefüges irreversible Versetzungen auf. Da bei der Verformung von Martensitgefüge in Formgedächtnislegierungen alle Bindungspartner beieinanderbleiben, bleibt die ursprüngliche, dem Austenitgitter zugehörige Lage der Atome zueinander gespeichert. Durch Erwärmen können die in der Martensitphase erzeugten bleibenden Verformungen wieder rückgängig gemacht werden. Das Bauteil nimmt dann seine ursprüngliche Gestalt wieder an. Dabei können große Kräfte spontan freigesetzt werden.

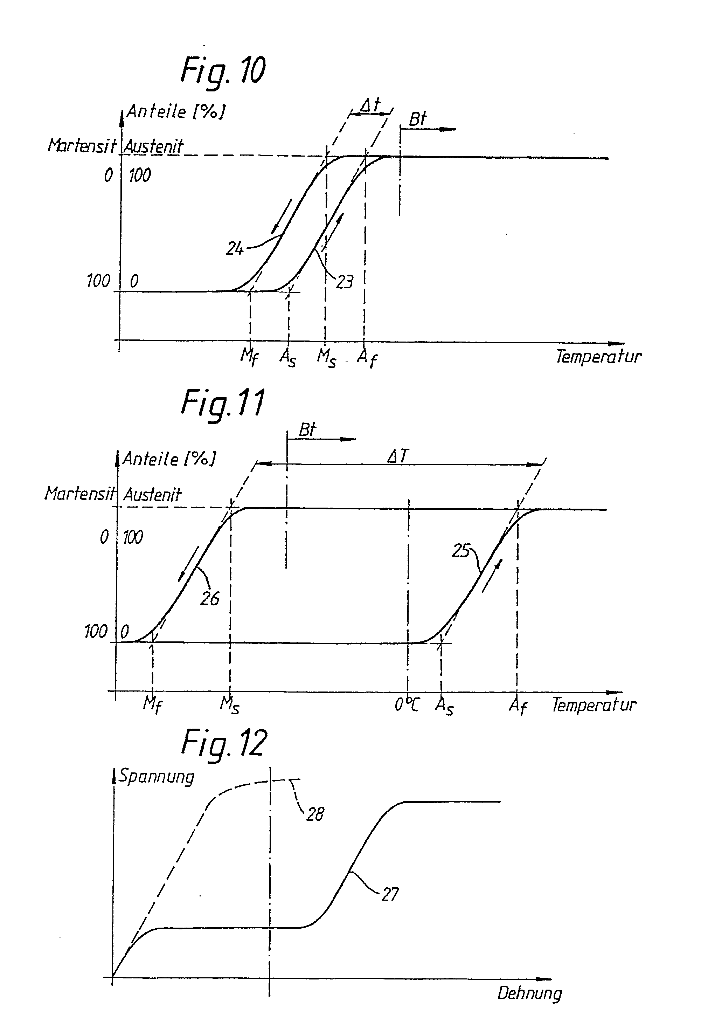

Die Spannungs-Dehnungs-Kennlinie 28 in Figur 12 von Formgedächtnislegierungen in austenitischem Zustand ist im Prinzip ganz ähnlich ausgebildet, wie die Spannungs-Dehnungs-Kennlinie von herkömmlichen Metallen. In martensitischem Zustand von Formgedächtnislegierungen sieht jedoch die Spannungs-Dehnungs-Kennlinie 27 völlig anders aus, wie Figur 12 erkennen läßt. Bei relativ niedrigen Spannungen, der sogenannten pseudoplastischen Streckgrenze, tritt ein freies Fliesen ohne Anstieg der Spannung ein - sogenanntes Martensitplateau. Erst wenn das Dehnungsvermögen des Werkstoffes erschöpft ist, steigt bei anhaltender Dehnung auch die Spannung wieder an und erreicht schließlich die tatsächliche Streckgrenze, oberhalb der bleibende und nicht mehr reversible bzw. "erinnerbare" Verformungen auftreten. Es gibt Formgedächtnislegierungen, bei denen pseudoplastische Verformungen innerhalb des martensitischen Gefügezustandes in der Größe bis zu 8 % durch Umwandlung in den austenitischen Zustand zurückgebildet werden können.

Die Umwandlung von martensitischem in den austenitischen Gefügezustand kann durch Temperaturveränderung herbeigeführt werden, wie dies die Figuren 10 und 11 veranschaulichen. Durch Erwärmen wird das martensitische Gefüge einer Formgedächtnislegierung in den austenitischen Zustand überführt; umgekehrt wird durch Abkühlen eines austenitischen Gefüges wieder deren martensitischer Zustand herbeigeführt. Die Umwandlungskurven 23 für das Austenitisieren bzw. 24 für das Martensitisieren sind nach Art von Hysteresekurven temperaturmäßig zueinander versetzt, wobei jedoch der Temperaturabstand $\Delta t$ der beiden Umwandlungskurven meist relativ klein ist, nämlich etwa 30 C bis 50 C beträgt. Die Temperaturpunkte für die beginnende bzw. für die beendigte Austenitisierung sind mit $A_s$ (Austenit-Start-Temperatur) und mit $A_f$ - (Austenit-Finish-Temperatur) bezeichnet. In ähnlicher Weise sind die Temperaturpunkte für die beginnende bzw. beendigte Martensitisierung mit $M_s$ - (Martensit-Start-Temperatur) und $M_f$ (Martensit-Finish-Temperatur) bezeichnet. Sowohl das Temperaturniveau der Umwandlung als auch der Abstand $\Delta t$ bzw. $\Delta T$ der beiden Umwandlungskurven 23 und 24 bzw. 25 und 26 ist legierungsabhängig. D. h., es gibt auch Legierungen, bei denen die beiden Umwandlungskurven 25 und 26 temperaturmäßig sehr weit auseinanderliegen, wie dies Figur 11 zeigt. Dort weisen die beiden Umwandlungskurven 25 und 26 temperaturmäßig einen relativ großen Abstand $\Delta T$ von etwa 150 K der Kelvinskala auf; der Gefrierpunkt von Wasser mit 0 C ist durch eine strichpunktierte Linie in dem Diagramm nach Figur 11 angedeutet. D. h. die Umwandlungskurve 25 für die Austenitisierung dieser Formgedächtnislegierung liegt etwa bei Raumtemperatur, wogegen die Umwandlungskurve 26 für die Martensitisierung im Bereich von etwa - 100 C bis - 120 C liegt. Derartige Formgedächtnislegierungen werden auch als Legierungen mit "erweiterter" Hysterese bezeichnet.

Bei Erwärmung einer Formgedächtnislegierung beginnt ab der Austenit-Start-Temperatur $A_s$ die Austenitisierung, die bei Erreichen bzw. Überschreiten der Austenit-Finish-Temperatur $A_f$ abgeschlossen ist. Bei höheren Temperaturen liegt nur noch austenitisches Gefüge in dem betreffenden Bauteil vor. Bei Temperaturen zwischen den erwähnten Temperaturpunkten $A_s$ und $A_f$ liegt zum Teil Martensit und zum Teil Austenit im Bauteil vor. Umgekehrt wird ausgehend von einem austenitischen Gefügezustand beim Abkühlen ab der Martensit-Start-Temperatur $M_s$ die Martensitisierung begonnen, die mit fortschreitender Abkühlung sich entsprechend der Umwandlungskurve 24 bzw. 26 ausbreitet. Bei Erreichen bzw. Überschreiten der Martensit-Finish-Temperatur $M_f$ ist das gesamte Gefüge in den martensitischen Zustand umgewandelt. Bei Temperaturwerten zwischen $M_f$ und $M_s$ liegen entsprechende Mischgefüge von Martensit und Austenit vor.

Man hat es also durch eine temperaturbedingte Gefügeumwandlung in der Hand, ob man die Spannungs-Dehnungs-Kennlinie 28 des austenitischen Gefügezustandes oder die entsprechende Kennlinie 27 des martensitischen Gefügezustandes zur Geltung kommen lassen möchte.

Selbstverständlich ist es möglich, die Welle/Nabe-Verbindung in herkömmlicher Weise als Preßverbund durch gewaltsames Einpressen der zu fügenden Teile herzustellen, wobei die Buchse 4 im austenitischen Zustand vorliegen sollte. Die dabei auftretende Dehnung bzw. Stauchung der Buchse ist in dem Diagramm nach Figur 12 durch eine vertikale strichpunktierte Linie angedeutet. Es wird erkennbar, daß diese Linie die für den austenitischen Zustand maßgebende Spannungs-Dehnungs-Linie 28 im Bereich eines relativ flachen Verlaufes schneidet, so daß sich etwaige Maßänderungen bzw. Dehnungsänderungen nur relativ wenig auf die Höhe der Spannung, mit der die Teile radial verspannt sind, auswirkt.

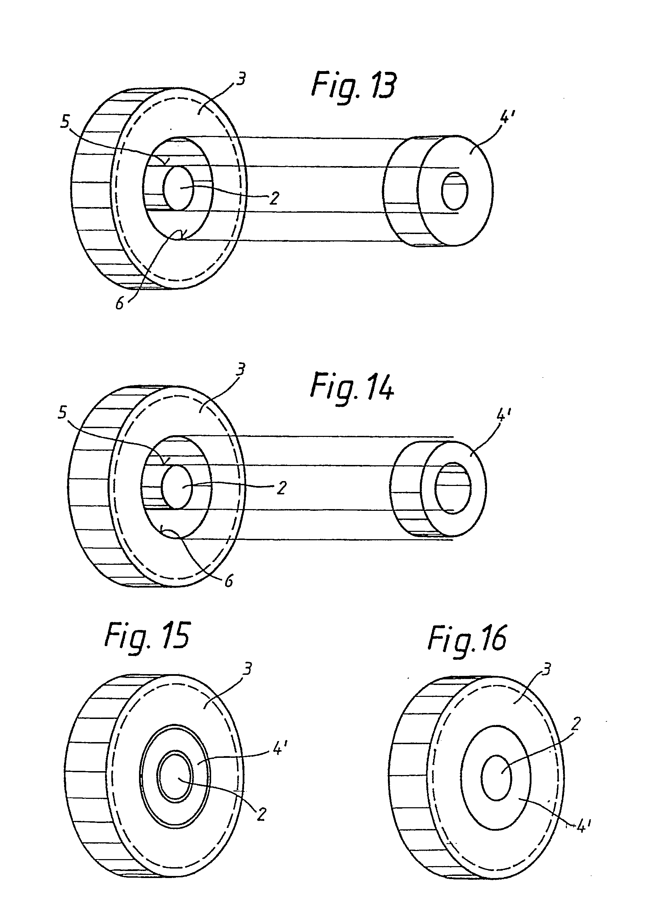

Derartige Einpreßvorgänge sind jedoch häufig bei Kleinteilen nur schwierig durchführbar, weil die beteiligten Teile selber nicht hoch belastbar sind oder nur sehr schwierig aufgrund ihrer Kleinheit in entsprechende Vorrichtungen eingespannt werden können. Auch hier hilft das vorteilhafte Verhalten der Formgedächtnislegierungen weiter. Um den Fügevorgang beim Herstellen der kraftschlüssigen Welle/Nabe-Verbindung zu vereinfachen, geht man in folgender Weise vor, was im Zusammenhang mit der Abfolge nach den Figuren 13 bis 16 erläutert werden soll. Die einzusetzende Buchse 4' wird aus einer Formgedächtnislegierung hergestellt, deren Martensit-Start-Temperatur $M_s$ unterhalb der Umgebungs- oder Betriebstemperatur der Welle/Nabe-Verbindung liegt. Im austenitischen Zustand der Formgedächtnislegierung wird die Buchse 4' zu der dem Einbauzustand entsprechenden Sollform geformt, wobei die Temperatur während dieser Formgebung oberhalb der sogenannten Austenit-Finish-Temperatur $A_f$ liegt. Die Sollform der Buchse 4' ist im wesentlichen dadurch gekennzeichnet, daß der Außendurchmesser der Buchse größer als der Innendurchmesser der nabenseitigen Umfangsfläche 6 und daß der Innendurchmesser der Buchse 4' kleiner als der Außendurchmesser der wellenseitigen Umfangsfläche 5 ist, was durch den Verlauf der horizontalen Vergleichslinien in Figur 13 angedeutet sein soll.

Die solcherart maßlich fertiggestellte Buchse 4' wird nun durch Abkühlen bis unter die Martensit-Finish-Temperatur $M_f$ in den voll martensitischen Zustand überführt und in diesem Zustand und bei diesen Temperaturen in der Wandstärke spanlos, d. h. durch Kaltverformung reduziert, wobei jedoch darauf zu achten ist, daß der pseudoplastische Verformungsbereich des Werkstoffes nicht überschritten wird. Die Wandstärkereduzierung der Buchse kann durch gleichzeitiges radiales Pressen von außen und von innen erfolgen. Es ist auch denkbar, die Buchse durch entsprechende Konen hindurchzupressen. Die Wandstärkereduzierung soll von der Innenseite und von der Außenseite her soweit gehen, daß in dem wandstärkereduzierten Zustand die Buchse 4' an ihrem Außenumfang Spiel gegenüber der nabenseitigen Umfangsfläche 6 und auch an ihrem Innenumfang Spiel gegenüber der wellenseitigen Umfangsfläche 5 aufweist. Die entsprechenden Durchmesserunterschiede bzw. Spiele sind in Figur 14 ebenfalls durch horizontal verlaufende Vergleichslinien angedeutet. Dieser wandstärkereduzierte Zustand muß, sofern sich das Einbauen in die zu erstellende Welle/Nabe-Verbindung nicht unmittelbar anschließt, über die entsprechende Wartezeit hinweg dadurch gespeichert werden, daß die Buchse 4' bei Temperaturen unterhalb der Austenit-Start-Temperatur $A_s$ aufbewahrt wird. Bei den meisten Formgedächtnislegierungen mit relativ nah beieinander liegenden Umwandlungskurven 23 und 24 muß die Buchse künstlich gekühlt werden, damit mit Sicherheit eine beginnende Austenitisierung vermieden werden kann. Hier zeigt sich der Vorteil von Formgedächtnislegierungen mit sog. "aufgeweiteter" Hysterese, bei denen die Umwandlungskurve 26 für die Martensitisierung einen sehr großen temperaturmäßigen Abstand $\Delta T$ von der Umwandlungskurve 25 für die Austenitisierung hat. Sofern hier Legierungen mit einer Austenit-Start-Temperatur von über 20 C verwendet werden, können die Buchsen 4' ohne weiteres bei Raumtemperatur gelagert werden, ohne daß selbsttätig eine Austenitisierung der wandstärkereduzierten Buchse einsetzt. Allerdings muß die Martensitisierung und die Wandstärkereduzierung bei sehr tiefen Temperaturen im Bereich unterhalb von -100 bis -120 C durchgeführt werden. Zweckmäßigerweise wird die Abkühlung mit flüssigem Stickstoff durchgeführt.

Die in der Wandstärke reduzierte und sich noch in martensitischem Zustand befindliche Buchse 4' kann dann aufgrund ihres Spieles gegenüber den entsprechenden Umfangsflächen 5 und 6 lose in den ringförmigen Zwischenraum der Welle/Nabeverbindung eingesetzt werden, wobei das Zahnrad 3 ebenfalls lose auf die Welle 2 aufgesteckt ist. Dieses lose Fügen der Buchse 4' in den Ringraum kann auch bei kleinen und wenig belastbaren Bauteilen problemlos durchgeführt werden. In Figur 15 ist das Spiel der Buchse 4' gegenüber der Welle 2 und gegenüber dem Zahnrad 3 zeichnerisch durch ovale Doppellinien angedeutet. Nach dem Einsetzen der Buchse 4' in den Zwischenraum kann die Buchse wieder in den austenitischen Zustand überführt werden, was durch Erwärmen bis oberhalb der Austenit-Finish-Temperatur $A_f$ geschieht, wobei dieses Erwärmen u.U. auch selbsttätig durch Anstieg der Buchsen-Temperatur auf Raumtemperatur erfolgen kann, was von der Lage der Umwandlungstemperaturen abhängt. Durch das Erwärmen geht die ursprüngliche radiale Stauchung der Buchse 4' wieder zurück; der Werkstoff "erinnert sich" wieder an seine Ausgangsform, die in Figur 13 angedeutet ist. Nachdem jedoch die Umgangsflächen 5 und 6 Über- bzw. Untermaß gegenüber den entsprechenden Flächen an der Buchse 4' aufweisen, das radiale "Aufweiten" der Buchse 4' also zwangsweise durch die entsprechenden Umfangsflächen 5 und 6 behindert wird, legt sich die Buchse 4' mit entsprechend hoher Kraft an diese Umfangsflächen 5 und 6 an und bewirkt dadurch die beabsichtigte kraftflüssige Drehmomentverbindung zwischen Welle und Nabe.

Durchmessertoleranzen der wellenseitigen oder der nabenseitigen Umfangsfläche 5 oder 6 oder auch Durchmessertoleranzen der entsprechenden Gegenflächen an der Buchse 4', sei es in der in Figur 13 angedeuteten Sollform in austenitischem Zustand, sei es in der in Figur 14 angedeuteten, wandstäkereduzierten zwischen Form im martensitischen Zustand, beiben für die Höhe der Anpressung und dementsprechend für die Höhe des maximal übertragbaren Grenzdrehmomentes weitgehend irrelevant, nachdem für die Anpressung im wesentlichen der Differenzbetrag an Spannung zwischen der Spannungs-Dehnungs-Kennlinie 27 im martensitischen Zustand und der entsprechenden Kennlinie 28 im austenitischen Zustand innerhalb des pseudoelastischen Verformungsbereiches maßgebend ist. In diesem Bereich ändert sich jedoch der Abstand der beiden Kennlinien relativ wenig, so daß die auftretenden Spannungen weitgehend unabhängig von dem Ausmaß der Dehnung sind.

In vorteilhafter Weise können dank der Verwendung von Formgedächtnislegierungen nicht nur Formtoleranzen ausgeglichen und gleichwohl weitgehend gleichbleibende Grenzdrehmomente erzielt werden, sondern es können sogar verschleißende Schlupfzustände wie bei einer Rutschkupplung in gewissen Grenzen zugelassen werden, weil dank der hervorragenden Gleiteigenschaften der Formgedächtnislegierungen zum einen sehr wenig Verschleiß auftritt und weil zum anderen auftretender Verschleiß sich ebensowenig auswirkt wie eine Formtoleranz.

Das Einbauverfahren wurde im Zusammenhang mit der Figurenfolge nach Figur 13 bis 16 am Beispiel einer massiven Buchse 4' dargestellt. Mit einer solchen massiven Buchse sind naturgemäß die höchsten Drehmomente übertragbar. Nachdem tendenziell die Formtoleranzen der Einzelteile weitgehend ohne Einfluß auf die Höhe des Grenzdrehmomentes bleiben, muß die Höhe dieses Grenzdrehmomentes selber durch andere Maßnahmen beeinflußt werden.

Ein Parameter zur Einflußnahme auf die Höhe des maximal übertragbaren Drehmomentes ist die federelastisch wirksame Wandstärke der Buchse, worauf weiter unten im Zusammenhang mit den anderen Ausführungsbeispielen von Buchsen noch näher eingegangen werden soll. Weitere Parameter, die sich drehmoment-relevant auswirken, ist der Durchmesser der Umfangsflächen und die axiale Erstreckung der Fügeflächen. Insbesondere aufgrund einer Formschlußverbindung im Bereich der wellenseitigen Umfangsfläche 5 zwischen Welle 2 und Mitnahmeelement, wie im Zusammenhang mit Figur 9 bereits gezeigt ist, kann die kraftschlüssige Drehmitnahme auf die nabenseitige Umfangsfläche 6 beschränkt werden, die den größeren Durchmesser hat. Mit zunehmendem Durchmesser der nabenseitigen Umfangsfläche 6 nimmt entsprechend auch das maximal übertragbare Drehmoment zu. In ähnlicher Weise wirkt sich auch eine Erhöhung der axialen Erstreckung des Mitnahmeelementes bzw. der entsprechenden Umfangsflächen auf die Höhe des übertragbaren Momentes aus.

Die in den Figuren 1 bis 4 gezeigte Buchse 4 weist gegenüber einer massiven Buchse nur relativ kleine Formänderungen auf, jedoch ist die Buchse 4 aufgrund eines umfangsmäßigen Versatzes der äußeren und inneren Längsrillen 12 bzw. 13 in Umfangsrichtung gewellt geformt, so daß eine gewisse radiale Formelastizität der Buchse gegeben ist. Mit einer solchen Buchse sind aufgrund der relativ hohen, federelastisch wirkenden Wandstärke der Buchse auch relativ hohe Anpreßkräfte und dementsprechend relativ hohe Grenzdrehmomente erreichbar. Allerdings sind die mit einer Buchse nach Figur 4 erreichbaren Grenzdrehmomente geringer als würde man eine maßgleiche Buchse ohne Längsrillen 12 bzw. 13, also eine vollständig massive Buchse verwenden. Umgekehrt würde eine tiefere Ausbildung der Längsrillen 13 bzw. eine Reduzierung der federelastisch wirksamen Wandstärke der Buchse auch bedeuten, daß die maximal übertragbaren Grenzdrehmomente entsprechend niedriger wären. Schließlich ist es denkbar, daß eine Buchse mit einem gewellten Blech hergestellt werden kann, wodurch die federelastisch wirksame Wandstärke noch mehr reduziert wird. Eine solche Längswellenbuchse 9 ist in Figur 5 dargestellt, wobei die Längswellen 11 in Doppel-Z-Form ausgebildet sind. Bei Längswellenbuchsen aus einem gewellten Blech hängt die Höhe des maximal übertragbaren Drehmomentes nicht nur von der federelastischen Blechdicke sondern auch von der Form der Wellung ab, wobei hier unterschiedliche Wellungsformen in großer Variantenzahl denkbar sind. Neben der dargestellten doppel-Z-förmigen Längswelle 11 sind auch Rechteckwellen, Sinuswellen, Dreieckwellen usw. denkbar. Auch die Anzahl der Wellen und ihre radiale Erstrecken wirkt sich auf die Höhe der Anpreßkraft und dementsprechend auf die Höhe des Grenzdrehmomentes aus.

Die in Figur 5 gezeigte Längswellenbuchse 9 weist am Umfang einen offenen Stoß 8, also einen axial verlaufenden Längsschlitz auf. Dank dieses Stoßes kann die Buchse 9 zumindest in einen der beiden beteiligten Partner der Welle/Nabe-Verbindung relativ einfach und ohne Kraftaufwand axial eingefügt werden, ohne daß eine Gefügeumwandlung durchgeführt werden muß. Dank der Zulässigkeit eines solchen Stoßes 8 ist es auch möglich, derartige Buchsen durch Rollen aus einem Blechstreifen herzustellen, der zuvor quer mit entsprechenden Wellen versehen wurde.

Auch ist es denkbar, einen Blechstreifen in Längsrichtung zu wellen und aus diesem in Längsrichtung gewellten Streifen durch Ziehen ein Längsschlitzrohr zu bilden, von dem dann einzelne Buchsen abgelängt werden. Dickerwandige Buchsen nach dem Vorbild von Figur 4 können durch Strangpressen hergestellt werden. Viele Formgedächtnislegierungen eignen sich auch für diese Art der Formgebung.

Außer einer in den Figuren 4 und 5 dargestellten Längswellung der Buchse sind auch Wellungen in Umfangsrichtung denkbar, wie die Figuren 6 und 7 zeigen. Und zwar ist die Buchse 14 aus einem Rohr auf einfache Weise durch Einstechen von Umfangsrillen 15 und 16 auf der Außen- bzw. der Innenseite herstellbar, welche Arbeitsoperation durch spanabhebende Bearbeitung auf einer Drehbank oder einem Drehautomaten vorgenommen werden kann. Um einen wellenähnlichen Verlauf zu erzeugen, müssen die außenseitigen Umfangsrillen 15 gegenüber den innenseitigen Umfangsrillen 15 axial um die halbe Teilung zueinander versetzt sein. Bei der aus Blech bestehenden Wellrohrbuchse 17 nach Figur 7 sind mehrere Doppel-Z-förmige Umfangswellen 18 in die Rohrwandung eingerollt, was ebenfalls auf einer drehbankähnlichen Werkzeugmaschine vorgenommen werden kann.

Schließlich ist es noch denkbar, in einen Blechstreifen Noppen einzudrücken und auf diese Weise ein Noppenband 20 zu erzeugen und dieses Noppenband dann zu einer Noppebuchse 21 zu rollen. Die Noppen können auf sehr rationelle Weise durch Walzen oder Prägen angebracht werden.

Schließlich sei auch noch auf die Möglichkeit hingewiesen, ein Mitnahmeelement durch einen oder mehrere axial hintereinander angeordnete Ringe zu bilden, wobei die einzelnen Ringe geschlossen oder ebenfalls mit einem offenen Stoß ausgebildet sein können. Die Ringe können in Massivform, in Profilform und/oder in gewellter Form ausgebildet sein.

Der Vollständigkeit halber sei auch noch die Möglichkeit erwähnt, daß das buchsenförmige Mitnahmeelement doppelwandig ausgebildet sein kann. Dabei können die äußere und die innere Lage der Buchse aus unterschiedlichen Formgedächtnislegierungen bestehen und/oder unterschiedlich stark im martensitischen Zustand plastisch verformt sein. Sinnvoll in diesem Zusammenhang ist vor allem eine solche doppellagige Mitnahmebuchse, deren Einzellagen in Umfangsrichtung formschlüssig miteinander verbunden aber axial zueinander verschiebbar sind. Nach der im martensitischen Gefügezustand vorgenommenen plastischen Verformung, die u.U. für beide ineinandergesteckten Lagen gemeinsam erfolgen kann, sind die beiden Lagen stramm ineinandergepreßt, lassen sich aber liecht in den Ringraum zwischen Welle und Nabe einsetzen. Nach der erwärmungsbedingten Austenitisierung legt sich die Außenlage an die Nabenbohrung kraftschlüssig an und die Innenlage schrumpft fest auf die Welle auf, wobei der ehemalige Pressverbund zwischen den beiden Einzellagen sich in einem Schiebesitz lockert. Die solcherart gebildete Welle/Nabe-Verbindung ist zwar einerseits, z. B. zu Reparaturzwecken axial leicht lösbar und wieder montierbar, andererseits begrenzt die doppellagige Mitnahmebuchse das übertragbare Drehmoment in wirksamer und dauerhafter Weise auf gleichbleibend hohem Niveau trotz etwaiger relativ großer Fügetoleranzen.

**Patentansprüche**

1. Kraftschlüssige Welle/Nabe-Verbindung mit zwei konzentrischen, unter Einhaltung eines Zwischenraumes zueinander angeordneten Umfangsflächen an der Welle und der Nabe, von denen wenigstens eine Umfangsfläche glattflächig ausgebildet ist, wobei der Zwischenraum durch ein elastisch vorgespanntes Mitnahmeelement ausgefüllt ist, welches Mitnahmeelement kraftschlüssig an der (den) glattflächigen Umfangsfläche(n) anliegt,
**dadurch gekennzeichnet,**
daß das Mitnahmeelement (4, 4', 9, 14, 17, 21) aus einer Formgedächtnislegierung besteht, deren sogenannte Martensit-Start-Temperatur $(M_s)$ unterhalb der Umgebungs- oder Betriebstemperatur (Bt) der Welle/Nabe-Verbindung liegt.

2. Welle/Nabe-Verbindung nach Anspruch 1,
**dadurch gekennzeichnet,**
daß das Mitnahmeelement in Form einer gewellten oder genoppten Buchse (4, 9, f14, 17, 21) oder in Form wenigstens eines Ringes mit einem radial elastischen Querschnitt ausgebildet ist.

3. Welle/Nabe-Verbindung nach Anspruch 2,
**dadurch gekennzeichnet,**
daß das gewellte Mitnahmeelement (4) mit einer der beiden Umfangsflächen formschlüssig verbunden ist, die zu diesem Zweck mit Formschlußflächen oder Mitnahmekeilen (7) in einer entsprechenden Teilung versehen ist (Figur 9).

4. Welle/Nabe-Verbindung nach einem der Ansprüche 1 bis 3,
**dadurch gekennzeichnet,**
daß das Mitnahmeelement (9) am Umfang einen offenen Stoß (8) aufweist (Figur 5).

5. Welle/Nabe-Verbindung nach Anspruch 1,
**dadurch gekennzeichnet,**
daß das Mitnahmeelement in Form eines Wellrohres (17) mit mehreren in Umfangsrichtung oder schraubengangähnlich verlaufenden Wellen (18) oder Sicken ausgebildet ist (Figur 7).

6. Verfahren zum Herstellen einer kraftschlüssigen Welle/Nabe-Verbindung nach einem der Ansprüche 1 bis 5, bei der ein hülsen- oder ringförmiges Mitnahmeelement in einen ringförmigen Zwischenraum zwischen zwei konzentrischen Umfangsflächen der Welle bzw. der Nabe unter Vorspannung eingebracht wird, **gekennzeichnet** durch die Anwendung folgender Schritte:
  a) das Mitnahmeelement (4') wird aus einer Formgedächtnislegierung hergestellt, deren sog. Martensit-Start-Temperatur ($M_s$) unterhalb der Umgebungs- oder Betriebstemperatur (Bt) der Welle/Nabe-Verbindung liegt;
  b) die Formgebung des Mitnahmeelementes (4') zu der dem Einbauzustand entsprechenden Sollform erfolgt bei Temperaturen oberhalb der sog. Austenit-finish-Temperatur ($A_f$) der Legierung in voll austenitisiertem Zustand;
  c) das in die Sollform gebrachte fertige Mitnahmeelement (4') wird durch Abkühlen bis unter die sog. Martensit-finish-Temperatur ($M_f$) in den voll martensitischen Zustand des Gefüges überführt;
  d) in diesem martensitischem Gefügezustand und bei Temperaturen unterhalb der sog. Martensit-finish-Temperatur ($M_f$) wird das Mitnahmeelement (4') durch spanlose Verformung aber ohne Überschreitung einer pseudoplastischen Verformung des Werkstoffes bezüglich der für die radiale Pressung des Mitnahmeelementes (4') innerhalb des ringförmigen Zwischenraumes der Welle/Nabe-Verbindung maßgebenden radialen Abmessungen reduziert, derart, daß sowohl die äußere, als auch die innere Umfangskontur des Mitnahmeelementes Spiel gegenüber der jeweils entsprechenden Umfangsfläche (5, 6) der Welle (2) bzw. Nabe (3) aufweist - Zwischenform (Figur 14);
  e) diese Zwischenform (Figur 14) des Mitnahmeelementes (4') wird durch Lagern bei Temperaturen unterhalb der sog. Austenit-start-Temperatur ($A_s$) bis zum Einbauen des Mitnahmeelementes (4') in die Welle/Nabe-Verbindung aufrechterhalten;
  f) nach dem losen Einsetzen des Mitnahmeelementes (4') in seiner temperaturgespeicherten Zwischenform in den ringförmigen Zwischenraum der ebenfalls lose gefügten Welle/Nabe-Verbindung (Zustand Figur 15) wird zumindest das Mitnahmeelement (4') am Einbauort auf eine oberhalb der sog. Austenit-finish-Temperatur ($A_f$) liegenden Temperatur wenigstens vorübergehend erwärmt, wodurch das Mitnahmeelement (4') in den voll austenitisierten Gefügezustand zurückgeführt und maßlich aufgrund der Formgedächtniseigenschaft des Werkstoffes wieder auf die ursprüngliche Sollform aufgeweitet wird, so daß das Mitnahmeelement den Zwischenraum unter Vorspannung ausfüllt (Zustand Figur 16).

7. Verfahren nach Anspruch 6,
**dadurch gekennzeichnet,**
daß das Mitnahmeelement aus einer solchen Formgedächtnislegierung hergestellt wird, bei der die Martensit-Start-Temperatur ($M_s$) und die Austenit-finish-Temperatur ($A_f$) um wenigstens 100 K der Klevinskala auseinander liegen ($\Delta T$) und deren Austenit-Start-Temperatur ($A_s$) oberhalb der Raumtemperatur liegt.

8. Verfahren nach Anspruch 6 oder 7,
**dadurch gekennzeichnet,**
daß das Mitnahmeelement (4, 4') durch Ablängen von einem durch Strangpressen hergestellten Profil erzeugt wird.

9. Verfahren nach Anspruch 6 oder 7,
**dadurch gekennzeichnet,**
daß das Mitnahmeelement (9) durch Ablängen von einem durch Ziehen eines Rohres herstellbaren Profil erzeugt wird.

10. Verfahren nach Anspruch 6 oder 7,
**dadurch gekennzeichnet,**
daß das Mitnahmeelement (21) durch Rollen aus einem Blechstreifen (20) erzeugt wird.

## Fig.1

## Fig.2

## Fig.3

Fig. 4

Fig. 6

Fig. 5

Fig. 7

Fig. 8

Fig. 9

## Fig. 10

Anteile [%]

Martensit | Austenit

0 | 100

100 | 0

Δt

Bt

24

23

$M_f$  $A_s$  $M_s$  $A_f$

Temperatur

## Fig. 11

Anteile [%]

Martensit | Austenit

0 | 100

100 | 0

Bt

ΔT

26

25

$M_f$  $M_s$  0°C  $A_s$  $A_f$

Temperatur

## Fig. 12

Spannung

28

27

Dehnung

11

*Fig. 13*

*Fig. 14*

*Fig. 15*

*Fig. 16*

**Europäisches Patentamt**

# EUROPÄISCHER RECHERCHENBERICHT

Nummer der Anmeldung

**EP 91 10 1911**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 004 696 (WESTINGHOUSE) <br> * Seiten 21-24; Figuren 11-14 * | 1 | F 16 D 1/08 <br> F 16 B 4/00 |
| A |  | 8 | B 23 P 11/02 |
|  | — — — |  |  |
| X | EP-A-0 174 120 (KRUMME) <br> * Das ganze Dokument * | 1 |  |
|  | — — — |  |  |
| Y | SOVIET INVENTIONS ILLUSTRATED, Woche 9106, 27. März 1981, Sektion P/Q, Klasse Q, Zusammenfassung Nr. 91-041922/06, Derwent Publications Ltd, Londen, GB; <br> & SU-A-1548 541 (APPEN) 07-03-1990 | 1-4,6,7 |  |
|  | — — — |  |  |
| Y | US-A-2 657 082 (BLACKMAN) <br> * Das ganze Dokument * | 1-4 |  |
|  | — — — |  |  |
| Y | SOVIET INVENTIONS ILLUSTRATED, Woche C28, 20. August 1980, Sektion P/Q, Klasse Q, Zusammenfassung Nr. G0664C/28, Derwent Publications Ltd, Londen, GB; <br> & SU-A-694 683 (PETROV) 30-10-1979 | 6,7 |  |
|  | — — — |  |  |
| Y | SOVIET INVENTIONS ILLUSTRATED, Woche 8645, 17. Dezember 1986, Sektion P/Q, Klasse Q, Zusammenfassung Nr. 86-297016/45, Derwent Publications Ltd, Londen, GB; <br> & SU-A-1217 615 (KRAMA) 15-03-1986 | 1,5 | **RECHERCHIERTE SACHGEBIETE (Int. Cl.5)** <br> F 16 D 1/00 <br> B 23 P <br> F 16 B |
|  | — — — |  |  |
| Y | US-A-2 239 641 (BIEREND) <br> * Seiten 1,2; Figuren 1-3 * | 1,5 |  |
|  | — — — |  |  |
| A | US-A-3 880 483 (SNYDER) <br> * Spalten 12,13; Figur 27 * | 2-4 |  |
|  | — — — |  |  |
| A | DE-A-1 575 835 (DEUTSCHE STAR) <br> * Das ganze Dokument * | 5 |  |
|  | — — — — — |  |  |

Der vorliegende Recherchenbericht wurde für alle Patentansprüche erstellt

| Recherchenort | Abschlußdatum der Recherche | Prüfer |
|---|---|---|
| Den Haag | 06 Juni 91 | BALDWIN D.R. |